(19) Europäisches Patentamt
European Patent Office
Office européen des brevets

(11) **EP 1 893 870 B1**

(12) **EUROPÄISCHE PATENTSCHRIFT**

(45) Veröffentlichungstag und Bekanntmachung des Hinweises auf die Patenterteilung:
**22.02.2012  Patentblatt 2012/08**

(51) Int Cl.:
*F03D 7/04* *(2006.01)*     *F03D 9/00* *(2006.01)*

(21) Anmeldenummer: 06754401.5

(22) Anmeldetag: **16.06.2006**

(86) Internationale Anmeldenummer:
**PCT/EP2006/005794**

(87) Internationale Veröffentlichungsnummer:
**WO 2006/136337 (28.12.2006 Gazette 2006/52)**

(54) **VERFAHREN UND SYSTEM ZUR REGELUNG DER DREHZAHL EINES ROTORS EINER WINDENERGIEANLAGE**

METHOD AND SYSTEM FOR REGULATION OF THE ROTATIONAL SPEED OF A ROTOR ON A WIND ENERGY UNIT

PROCEDE ET SYSTEME POUR REGLER LA VITESSE DE ROTATION D'UN ROTOR D'UNE INSTALLATION EOLIENNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.06.2005  DE 102005029000**

(43) Veröffentlichungstag der Anmeldung:
**05.03.2008  Patentblatt 2008/10**

(73) Patentinhaber: **REpower Systems AG**
**22297 Hamburg (DE)**

(72) Erfinder: **KRÜGER, Thomas**
**24784 Westerrönfeld (DE)**

(74) Vertreter: **Seemann, Ralph et al**
**Patentanwälte Seemann & Partner**
**Ballindamm 3**
**20095 Hamburg (DE)**

(56) Entgegenhaltungen:
**WO-A-99/07996     WO-A-2006/032451**
**US-A- 4 193 005     US-A- 5 155 375**

• **E. HAU: "Windkraftanlagen" 1995, SPRINGER VERLAG , BERLIN , XP002398040 Seite 318 - Seite 333**

EP 1 893 870 B1

**Beschreibung**

Die Erfindung betrifft ein Verfahren und ein System zur Regelung der Drehzahl eines Rotors einer Windenergieanlage, wobei die Windenergieanlage einen Generator und ein Rotorblatt umfasst.

Eine Windenergieanlage wandelt Windenergie in elektrische Energie um und speist diese zumeist in das öffentliche Stromnetz ein. Dies geschieht, indem die kinetische Energie des Windes den Rotor in eine Drehbewegung versetzt, welche an einen Generator weitergegeben und dort in elektrischen Strom umgewandelt wird.

Zur Regelung der Drehzahl eines Rotors einer drehzahlvariablen Windenergieanlage sind verschiedene Ansätze gewählt worden. Hierbei wird üblicherweise zwischen zwei Betriebszuständen unterschieden, nämlich der Drehzahlregelung im Teillastbetrieb und im Volllastbetrieb, wobei üblicherweise im Teillastbetrieb eine so genannte "Momentenregelung" und im Volllastbetrieb eine so genannte "Pitch-Regelung" stattfindet. Unter Momentenregelung wird eine Drehzahlregelung verstanden, bei der zur Erreichung einer hohen Leistungsausbeute der Windenergieanlage die Drehzahl der Anlage im Teillastbereich auf das optimale Verhältnis zwischen Umfangsgeschwindigkeit des Rotors und Windgeschwindigkeit eingestellt wird. Die Leistungsausbeute wird gut über den Begriff Leistungsbeiwert $c_P$ beschrieben, der ein Quotient aus der Leistungsaufnahme der Anlage und der in der Luftbewegung enthaltenen Leistung ist. Das Verhältnis der Umfangs- zu ungestörter Windgeschwindigkeit wird Schnelllaufzahl genannt. Die Rotorblätter sind dabei auf den Blattwinkel eingestellt, der das höchste Antriebsmoment an der Rotorwelle erzeugt. Die Drehzahl wird über das Gegenmoment am Generator beeinflusst. Das heißt, die Stellgröße für die Drehzahlregelung über die so genannte Momentenregelung ist das Drehmoment und insbesondere das Drehmoment am Generator, das umso höher ist, je mehr Leistung der Generator aus dem System bzw. der Windenergieanlage herausnimmt und in ein Netz einspeist.

Die als Pitch-Regelung bezeichnete Drehzahlregelung, die im Volllastbetrieb der Windenergieanlage greift, funktioniert über die Verstellung des Blattwinkels des Rotorblattes. Ist bei der Nennwindgeschwindigkeit das Nennmoment am Generator (Nennlast) erreicht, kann die Drehzahl durch weiteres Erhöhen des Generatormoments nicht mehr auf dem Arbeitspunkt gehalten werden. Daher wird der aerodynamische Wirkungsgrad der Blätter verschlechtert, indem sie aus ihrem optimalen Einstellwinkel herausgefahren werden. Diesen Vorgang nennt man "pitchen", von dem englischen Begriff to pitch = neigen. Die Drehzahl wird somit ab Erreichen des Nenngeneratormoments über den Einstellwinkel der Blätter beeinflusst. Böen werden durch kurzzeitige Erhöhung der Rotordrehzahl und Verstellen des Anstellwinkels besser ausgesteuert als bei anderen Anlagen, die eine derartige so genannte Pitch-Regelung nicht kennen. Somit wird über die Stellgröße des Blattwinkels des Rotorblattes die Leistungsaufnahme des Rotors beeinflusst, wodurch die Drehzahl des Rotors geregelt werden kann.

Es gibt eine Vielzahl von Patenten und Fachartikeln zur Regelung von drehzahlvariablen Windenergieanlagen durch Blattverstellung (Pitch-Regelung) sowie Beeinflussung des Generatormoments (Momenten- oder Leistungsregelung). Bei allen bekannten Verfahren wird letztlich die Drehzahl der Windenergieanlage geregelt. Im Teillastbereich ist man bemüht, die Drehzahl der Windgeschwindigkeit nachzuführen, um so den Rotor bei konstantem Blattwinkel auf dem energetisch optimalen Betriebspunkt zu halten. Im Volllastbereich versucht man, Drehzahl und Drehmoment konstant zu halten. Dabei wird die Drehzahl durch Variation des Blattwinkels geregelt.

Aus der US 4 695 736 A ist die Regelung einer drehzahlvariablen Windenergieanlage bekannt. In diesem Dokument ist offenbart, dass aus der gemessenen Leistung über eine Kennlinie ein Drehzahlsollwert bestimmt wird, der im Teillastbereich durch Variation des Generatormoments nachgefahren wird. Bei Erreichen des Nenndrehmoments wird der Pitchregler aktiviert, der dann versucht, die Drehzahl auf einen festen Wert zu regeln.

Aus der US 5 155 375 A ist ein Windschätzer bekannt, der die aktuelle Windgeschwindigkeit aus dem Drehmomentsollwert, dem Blattwinkelmesswert sowie dem Rotordrehzahlmesswert bestimmt. Daraus werden neben dem Sollwert für die Drehzahl Vorsteuerwerte für den Blattwinkel sowie das Generatormoment bestimmt. Die Drehzahl wird dann entlang eines Schwertes nachgefahren.

In der US 6 137 187 A wird das Drehmoment des Generators über eine feste, als Lookup-Tabelle ausgeführte Leistungs/Drehzahl-Kennlinie eingestellt. Ein Pitchregler und ein Drehmomentregler arbeiten unabhängig voneinander und regeln auf eine feste Nenndrehzahl.

Die im Stand der Technik beschriebenen Verfahren und Regelsysteme optimieren zwar teilweise schon die Energieausbeute bei niedrigen Windgeschwindigkeiten. Der Übergang zwischen Teil- und Volllastbetrieb wird allerdings nicht oder nur unzureichend behandelt. Insbesondere bei der Gestaltung des Übergangs zwischen Teil- und Volllastbetrieb kann somit noch ein höherer Energieertrag erzielt werden und die Betriebslasten verringert werden.

Bei dem System für variablen Geschwindigkeitsbetrieb gemäß der US 6 137 187 A, die der EP 1 007 844 B1 entspricht, die einen Asynchrongenerator zum Erzeugen von Leistung, eine Drehmomentsteuereinheit zur Steuerung des Generatordrehmoments unter Benutzung einer feldorientierten Regelung und einer Anstellwinkelsteuereinheit zur Anstellwinkelregulierung, die auf der Rotorgeschwindigkeit des Generators basiert und unabhängig von der Drehmomentsteuereinheit operiert, offenbart, müssen die Drehzahl/Leistungs-Kennlinien derart gestaltet werden, dass die Drehzahl im Teillastbereich immer niedriger ist als die Nenndrehzahl, um zu verhindern, dass der Pitchregler frühzeitig eingreift und die Anlage abregelt. Hierdurch ergeben sich zum Teil erhebliche Ertragseinbußen.

In WO-A-99/07996 ist außerdem ein Generator für eine mit unterschiedlichen Geschwindigkeiten betriebene Windturbine offenbart. Hierbei weist die Windturbine einen doppelt gespeisten Generator ("doubly fed generator") auf, wobei die Generatorrotorgeschwindigkeit auf der Anwendung einer Drehmomentsteuerung und einer Blattwinkelregulierung basiert. Hierbei ist ein System für einen variablen Geschwindigkeitsbetrieb vorgesehen, wobei ein Induktionsgenerator mit gewickeltem Rotor zur Erzeugung von Leistung vorgesehen ist. Ferner ist eine Drehmomentsteuereinheit zur Steuerung des Generatordrehmoments unter Benutzung einer feldorientierten Regelung sowie eine Blattwinkelsteuerungseinheit zur Blattwinkelregulierung, die auf der Rotorgeschwindigkeit des Generators basiert und unabhängig von der Drehmomentsteuerung operiert, vorgesehen.

Es ist Aufgabe der vorliegenden Erfindung, ein Verfahren und ein System zur Regelung der Drehzahl eines Rotors einer Windenergieanlage mit einem Generator und einem Rotorblatt derart weiterzubilden, dass eine höhere Energieausbeute ermöglicht ist.

Gelöst wird diese Aufgabe durch ein Verfahren zur Regelung der Drehzahl eines Rotors einer Windenergieanlage mit einem Generator und wenigstens einem Rotorblatt, wobei als erste Stellgröße ein Blattwinkel (Pitch) des Rotorblatts vorgesehen ist und als zweite Stellgröße ein Drehmoment des Generators, mit den folgenden Verfahrensschritten:

- Bereitstellen eines ersten Drehzahlsollwertes als Eingangswert für eine Blattwinkelsteuer- oder -regelvorrichtung und

- Bereitstellen eines zweiten Drehzahlsollwertes als Eingangswert für eine Drehmomentsteuer- oder -regelvorrichtung, wobei der erste und der zweite Drehzahlsollwert in einem Übergangsbereich von Teillast und Volllast unterschiedlich zueinander sind.

Vorzugsweise sind der erste und/oder der zweite Drehzahlsollwert veränderlich bzw. variable Drehzahlsollwerte. Vorzugsweise werden der erste und der zweite Drehzahlsollwert aufgrund aktueller Betriebsverhältnisse verändert. Durch das erfindungsgemäße Regelverfahren kann die Leistungsausbeute der Windenergieanlage erhöht werden, da insbesondere im Übergangsbereich von Teillast zu Volllast zwei voneinander verschiedene Drehzahlsollwerte als Eingangswert für eine Drehmomentsteuer- oder -regelvorrichtung und eine Blattwinkelsteuer- oder -regelvorrichtung eine Unabhängigkeit der Steuerung oder Regelung des Blattwinkels und des Drehmoments ermöglichen. Hierbei kann beispielsweise realisiert werden, dass der Pitchregler (Blattwinkelsteuer- oder -regelvorrichtung) in einem Übergangsbereich von Teillast zu Volllast eingesetzt werden kann, so dass dieser beispielsweise bei einer positiven Bö (schnelle Erhöhung der Windgeschwindigkeit) schon vor Erreichen der Volllast zu regeln beginnt bzw. den Blattwinkel entsprechend einsteuert oder regelt. Entsprechend kann auch der Momentenregler bzw. die Drehmomentsteuer- oder -regelvorrichtung im Übergangsbereich von Teillast und Volllast bzw. Volllast zu Teillast vorher schon in Funktion treten, wenn der Drehzahlsollwert der Drehmomentsteuer- oder -regelvorrichtung einem optimalen Drehzahlsollwert nachgeführt wird.

Hierbei sind der erste und der zweite Drehzahlsollwert in einem Übergangsbereich von Teillast und Volllast unterschiedlich zueinander. Der Übergangsbereich kann beispielsweise bei 80 % Volllast bzw. Nennlast beginnen und bei 110 % der Windgeschwindigkeit enden, bei der Volllastbetrieb bzw. Nennlastbetrieb der Windenergieanlage gegeben ist.

Vorzugsweise ist ein dritter Drehzahlsollwert vorgesehen, wobei der erste und der zweite Drehzahlsollwert sich aus dem dritten Drehzahlsollwert bestimmen. Im Rahmen der Erfindung werden unter dem Begriff "bestimmen" insbesondere auch die Begriffe "berechnen" und "ableiten" verstanden. Die Drehzahl ist vorzugsweise diejenige, die im Generator anliegt. Der dritte Drehzahlsollwert ist vorzugsweise die optimale Drehzahl, also diejenige Drehzahl, bei der ein Optimum an Leistungsausbeute erzielt werden kann. Der dritte Drehzahlsollwert ist vorzugsweise auch veränderlich bzw. ein variabler Drehzahlsollwert.

Vorzugsweise bestimmt sich der erste Drehzahlsollwert aus einer Differenz eines Drehmomentsollwertes und eines Drehmomentistwertes als Drehmomentdifferenz. Im Rahmen der Erfindung bedeuten Begriffe, die in Klammern gesetzt sind, Bezeichnungen einer Definition, die vorher gegeben wurde. Die Drehmomentdifferenz, die eine Drehmomentregeldifferenz sein kann, ist somit die Differenz eines Drehmomentsollwertes und eines Drehmomentistwertes. Der Drehmomentistwert wird beispielsweise im Generator gemessen bzw. kann auch an anderer Stelle gemessen werden, z.B. über eine Messung der elektrischen Größe im Umrichter. Eine besonders einfache Regelung ist dann gegeben, wenn die Drehmomentdifferenz beim Bestimmen des ersten Drehzahlsollwertes als linearer Term beiträgt.

Vorzugsweise bestimmt sich der zweite Drehzahlsollwert aus dem Blattwinkelsollwert und/oder aus einer Differenz eines Blattwinkelsollwertes und eines Blattwinkelistwertes als Blattwinkeldifferenz. Der Blattwinkelistwert ist entweder in einem Computer bzw. Speicher entsprechend der Verstellung des Blattwinkels gespeichert bzw. wird oder kann entsprechend gemessen werden. Von der Blattwinkeldifferenz kann auch noch der so genannte "fine pitch", nämlich die untere Grenze für den Blattwinkelsollwert abgezogen werden. Dieser Wert (fine pitch) ist abhängig von der Windenergieanlage und vorzugsweise auch abhängig von der Windgeschwindigkeit. Besonders bevorzugt ist dieser Wert von der Schnelllaufzahl des Rotors abhängig. Ein besonders einfaches Regelverfahren ist dann möglich, wenn die Blattwinkeldifferenz beim Bestimmen des zweiten Drehzahlsollwertes als linearer Term beiträgt.

Unter dem Merkmal, dass der erste und der zweite Drehzahlsollwert unterschiedlich zueinander sein können, wird im Rahmen der Erfindung insbesondere verstanden, dass sie beispielsweise voneinander abweichen. Die Abweichung tritt vorzugsweise in einem Bereich des Übergangs von Teillast zu Volllast oder umgekehrt auf. Vorzugsweise ist der Bereich durch eine Blattwinkeldifferenz und/oder eine Drehmomentdifferenz definiert, die größer Null ist.

Vorzugsweise ist der dritte Drehzahlsollwert ein optimaler Drehzahlsollwert, entspricht also einer Drehzahl, die abhängig ist von der Windgeschwindigkeit, bei der eine optimale Leistungsausbeute der Windenergieanlage gegeben ist.

Vorzugsweise wird der dritte Drehzahlsollwert aus einem Drehmomentistwert bestimmt. Besonders effizient ist das Regelverfahren dann, wenn der dritte Drehzahlsollwert, insbesondere mit einer, insbesondere vorgebbaren, Zeitverzögerung, dem Drehmomentistwert nachgeführt wird. Hierdurch ist eine besonders effiziente Böenerkennung möglich und eine effiziente Ausnutzung bzw. schon eine Nachregelung der Windenergieanlage bei Böen zu dem optimalen Arbeitspunkt möglich, wodurch eine hohe Leistungseffizienz gegeben ist.

Besonders effizient ist das Regelverfahren, wenn die Bestimmung des ersten Drehzahlsollwertes eine Addition des dritten Drehzahlsollwertes und der Funktion $k_1$ x Drehmomentdifferenz x θ (Drehmomentdifferenz) umfasst. Bei der Funktion θ, die in diesem Fall in Abhängigkeit der Drehmomentdifferenz ist, handelt es sich um die Heaviside-Funktion. Diese ist 0 für eine Drehmomentdifferenz bzw. die Variable, von der die Heaviside-Funktion abhängt, sofern dieser Wert ≤ 0 ist und 1, sofern die Drehmomentdifferenz > 0 ist. Vorzugsweise umfasst die Bestimmung des zweiten Drehzahlsollwertes eine Subtraktion der Funktion $k_2$ x Blattwinkeldifferenz x θ (Blattwinkeldifferenz) von dem dritten Drehzahlsollwert.

Es ist besonders bevorzugt, wenn bei Überschreitung einer, insbesondere vorgebbaren, Differenz eines Drehzahlistwertes von dem ersten, zweiten und/oder dritten Drehzahlsollwert und/oder bei Überschreiten eines, insbesondere vorgebbaren, Wertes der Drehmomentdifferenz die Windenergieanlage gebremst wird bzw. die Drehzahl des Rotors schnell reduziert wird. Bei Überschreitung der Regelabweichung des Drehmoments oder der Rotordrehzahl von einem Abweichungsgrenzwert erkennt dann die Anlage einen Fehler. Beispielsweise fällt das Drehmoment auf 0, wenn der Generator ausfällt. In diesem Fall steigt die Drehmomentregelabweichung sehr stark. Der Regler ändert dann seinen Regelalgorithmus, da dann die Anlage gebremst oder angehalten werden muss. In diesem Fall wird beispielsweise der Blattwinkelsollwert verstärkt oder maximiert, und zwar in Richtung einer geringeren Umdrehungszahl. Ein wesentlicher Vorteil dieses Regelverfahrens ist es, dass das Verfahren bzw. der Regler selbst einen Fehler erkennt und schneller reagieren kann.

Zudem ist es bevorzugt, wenn zu dem erfindungsgemäßen Regelverfahren ein übergeordnetes Regelverfahren vorgesehen ist. Dieses Regelverfahren bzw. dieser Regler heißt Leistungsregelverfahren bzw. Leistungsregler und greift immer dann ein, wenn eine konstante elektrische Abgabeleistung gefordert wird oder notwendig ist. Das Regelverfahren bzw. der Regler greift dann in die Drehmomentregelung des Generators ein, in dem ein maximales Drehmoment vorgegeben wird, das geringer ist als das Nenndrehmoment. Damit greift dann auch der Blattwinkelregler bzw. der Pitch-Regler schneller ein.

Die Aufgabe wird ferner durch ein System zur Regelung der Drehzahl eines Rotors einer Windenergieanlage mit einem Generator und einem Rotorblatt umfassend eine Blattwinkelsteuer- oder -regelvorrichtung und eine Drehmomentsteuer- oder -regelvorrichtung gelöst, wobei außerdem eine erste Vorrichtung zur Bestimmung eines ersten Drehzahlsollwertes als erste Drehzahlsollwertbestimmungsvorrichtung und eine zweite Vorrichtung zur Bestimmung eines zweiten Drehzahlsollwertes als zweite Drehzahlsollwertbestimmungsvorrichtung, vorgesehen ist, wobei der erste Drehzahlsollwert der Blattwinkelsteuer- oder -regelvorrichtung zuführbar ist und der zweite Drehzahlsollwert der Drehmomentsteuer- oder -regelvorrichtung zuführbar ist, wobei der erste und der zweite Drehzahlsollwert in einem Übergangsbereich von Teillast und Volllast unterschiedlich zueinander sind. Im Rahmen der Erfindung kann das erfindungsgemäße System auch eine erfindungsgemäße Einrichtung sein.

Vorzugsweise sind der erste und/oder der zweite Drehzahlsollwert veränderlich bzw. variable Drehzahlsollwerte. Vorzugsweise ist die erste Drehzahlsollwertbestimmungsvorrichtung und die zweite Drehzahlsollwertbestimmungsvorrichtung eine einzige Vorrichtung. In diesem Fall kann die Vorrichtung mehrere Ausgänge haben. Wenn eine dritte Vorrichtung zur Bestimmung eines dritten Drehzahlsollwertes als dritte Drehzahlsollwertbestimmungsvorrichtung vorgesehen ist, wobei ein Ausgang der dritten Drehzahlsollwertbestimmungseinrichtung mit einem Eingang der ersten und/oder zweiten Drehzahlsollwertbestimmungsvorrichtung verbunden ist, kann die Effizienz der Windenergieanlage insbesondere bei Böen sehr gut erhöht werden. Unter verbunden wird im Rahmen der Erfindung eine, insbesondere mittelbare, Verbindung beispielsweise über ein Kabel oder einen Datenbus, verstanden. Es kann allerdings auch eine Datenfunkverbindung oder eine sonstige Verbindung vorgesehen sein. Vorzugsweise sind sämtliche Drehzahlsollwertbestimmungsvorrichtungen in einer einzigen Vorrichtung und/oder in einem gemeinsamen Gehäuse vorgesehen. Zweckmäßigerweise ist die erste, zweite und/oder dritte Vorrichtung wenigstens eine Datenverarbeitungsvorrichtung oder wenigstens ein Computer bzw. umfasst wenigstens einen Computer.

Vorzugsweise ist eine Vorrichtung zur Bestimmung der Differenz eines Drehmomentsollwertes und eines Drehmomentistwertes als Drehmomentdifferenzbestimmungsvorrichtung vorgesehen, wobei der Ausgang der Drehmomentdifferenzbestimmungsvorrichtung wenigstens mittelbar mit einem Eingang der ersten Drehzahlsollwertbestimmungsvorrichtung verbunden ist. Es ist außerdem vorzugsweise eine Vorrichtung zur Bestimmung der Differenz eines Blattwinkelsollwertes und eines Biattwinkelistwertes als Blattwinkeldifferenzbestlmmungsvorrichtung vorgesehen, wobei der Ausgang der Blattwinkeldifferenzbestimmungsvorrichtung wenigstens mittelbar mit einem Eingang der zweiten Drehzahlsollwertbestimmungsvorrichtung verbunden ist. Vorzugsweise ist eine Drehmomentbestimmungsvorrichtung vorgesehen, dessen Ausgang wenigstens mittelbar mit der dritten Drehzahlsollwertbestimmungsvorrichtung verbunden ist.

Es ist außerdem eine erfindungsgemäße Windenergieanlage mit einem erfindungsgemäßen System zur Regelung der Drehzahl eines Rotors, das vorstehend beschrieben wurde, vorgesehen.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:

Fig. 1      eine schematische Darstellung wesentlicher Komponenten einer Windenergieanlage,

Fig. 2      ein schematisches vereinfachtes Regelungsschema gemäß der Erfindung,

Fig. 3      ein schematischer Ausschnitt des Regelungsschemas aus Fig. 2,

Fig. 4 4a    ein Diagramm der Windgeschwindigkeit über die Zeit,

4b          ein Diagramm der Generatordrehzahl über die Zeit und

4c          ein Diagramm des Generatordrehmoments über die Zeit.

Fig. 5 5a    ein Diagramm einer gemessenen Windgeschwindigkeit über die Zeit,

5b          ein Diagramm eines gemessenen Generatordrehmoments über die Zeit,

5c          ein Diagramm der Generatorgeschwindigkeit bzw. der Drehzahl mit verschiedenen Kurven über die Zeit,

5d          ein Diagramm eines Blattwinkels über die Zeit.

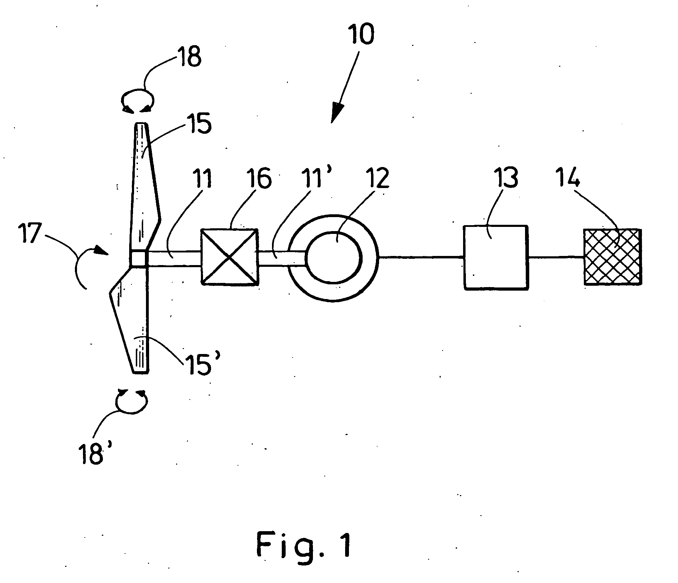

Fig. 1 zeigt sehr schematisch eine Windenergieanlage 10, umfassend einen Rotor 11, an dem Rotorblätter 15 und 15' angeordnet sind. Der Rotor 11 ist mit einem Getriebe 16 verbunden. Das Getriebe 16 ist über eine Welle 11' mit einem Generator 12 verbunden. Die Rotor 11 ist drehbar, und zwar entsprechend einer angedeuteten Rotationsbewegung 17. Durch entsprechende Rotation des Rotors 11 und über das Getriebe 16 auch der Welle 11' kann ein üblicher Generator 12, beispielsweise ein Asynchron-Generator, eine elektrische Leistung erzeugen, die über einen Umrichter 13 einem Netz 14, an das beispielsweise Verbraucher angeschlossen sind, zur Verfügung gestellt werden kann. Entsprechende übliche Regelungen drehzahlvariabel betriebener Anlagen sind beispielsweise in dem Buch von Siegfried Heier, "Windkraftanlagen, Systemauslegung, Netzintegration und Regelung", Verlag Teubner, 2005, Seite 320 bis Seite 328, beschrieben. In Fig. 1 ist auch noch die Veränderung der Blattwinkel der Rotorblätter 15, 15' angedeutet, und zwar über eine Blattwinkelverstellbewegung 18 bzw. 18'. Durch die Verstellung des Blattwinkels (Pitch) der Rotorblätter 15 und 15' wird die Leistungsaufnahme des Rotors 11 bzw. des oder der angeschlossenen Triebstrangs bzw. Triebstränge sowie der zu dem Rotor gehörenden Rotorblätter 15 und 15' beeinflusst.

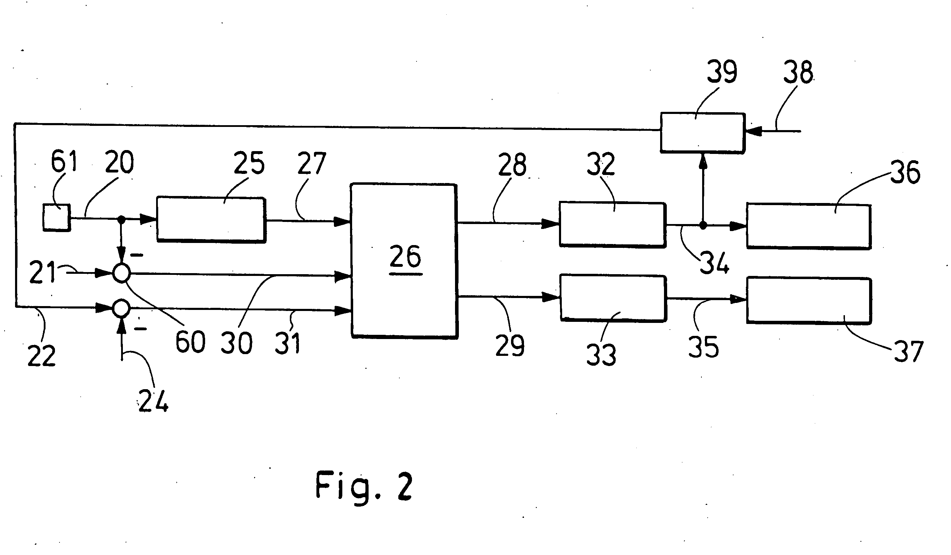

Gemäß der Erfindung wird nun ein Regelschema verwendet, wie es in Fig. 2 schematisch dargestellt ist. Mittels einer Drehmomentbestimmungsvorrichtung 61 oder eines Drehmomentsensors 61 wird ein Drehmoment, beispielsweise das durch den Generator 12 aus dem System entnommene Drehmoment bzw. das zur Bremsung des Rotors 11 verwendete Drehmoment, gemessen und als gemessenes Drehmoment 20 einem Drehzahlnachführer 25 (RPM tracker) zugeführt. Aus dem gemessenen Drehmoment wird in dem Drehzahlnachführer 25 ein Drehzahlsollwert bestimmt oder berechnet. Der Drehzahlsollwert ist hierbei vorzugsweise die Drehzahl, bei der der Rotor auf dem besten Wirkungsgrad betrieben wird. Dieser Sollwert, der im Rahmen dieser Erfindung als dritter Drehzahlsollwert 27 bezeichnet wird, dient nun dazu, in einer Berechnungseinheit 26, die auch Bestimmungseinheit oder RPM shifter genannt werden kann, zwei unterschiedliche Drehzahlsollwerte für den Blattwinkelregler 32 und den Drehmomentregler 33 zu berechnen bzw. zu bestimmen. Hierbei handelt es sich um einen ersten Drehzahlsollwert 28, der dem Blattwinkelregler 32 zugeführt und einem zweiten Drehzahlsollwert 29, der dem Drehmomentregler 33 zugeführt wird.

Der erste Drehzahlsollwert 28 und der zweite Drehzahlsollwert 29 können nun noch von dem am Eingang der Berechnungseinheit 26 anliegenden Werten einer Drehmomentregeldifferenz 30 und einer Blattwinkeldifferenz 31 abhängen. Die Drehmomentregeldifferenz 30 ist ein Differenzwert eines Drehmomentsollwertes oder Nenndrehmoments 21 und dem des gemessenen Drehmoments 20. In der Drehmomentdifferenzbestimmungsvorrichtung 60 wird die entsprechende Differenz gebildet. Anstelle einer Blattwinkeldifferenz 31 kann am Eingang der Berechnungseinheit 26 der Blattwinkelsollwert 34 unmittelbar anliegen.

Die Blattwinkeldifferenz 31 ergibt sich aus einer Blattwinkelregelabweichung 22, von der ein minimaler Blattwinkel 24 abgezogen wird. Der minimale Blattwinkel 24 ist gerätespezifisch und kann von der Drehzahl abhängen. Der minimale Blattwinkel 24 kann auch von der Windgeschwindigkeit und/oder der Schnelllaufzahl abhängen. Die Blattwinkelregelabweichung 22 ergibt sich aus einer in der Differenzvorrichtung 39 gebildeten Differenz der Blattwinkelstellgröße 34 und des gemessenen Blattwinkels 38. Die Berechnungseinheit 26 kann ein Computer sein.

Der Blattwinkelregler 32, in den der erste Drehzahlsollwert 28 eingebracht wurde, gibt eine entsprechende Blattwinkelstellgröße 34 an eine Blattwinkelverstellvorrichtung 36, beispielsweise ein hydraulisches oder elektrisches Verstellsystem wie beispielsweise ein Motor, aus. Der Drehmomentregler 33 gibt eine Drehmomentstellgröße 35 an eine Drehmomenteinstellvorrichtung 37 aus. Bei der Drehmomenteinstellvorrichtung handelt es sich üblicherweise um Leistungselektronik, die im Umrichter 13 angeordnet ist. Der Drehmomentregler 33 kann auch den Schlupf des Generators 12, sofern eine entsprechende Schlupfeinstellung möglich ist, regeln oder steuern. Die Windenergieanlage gemäß der Erfindung kann mit einem Getriebe, wie in Fig. 1 dargestellt ist, versehen werden, allerdings auch getriebelos sein. Anstatt eines Asynchrongenerators können auch andere Generatoren verwendet werden.

Durch gezielte Verstimmung der Drehzahlsollwerte 28 und 29 wird die Aktivität des Blattwinkelreglers 32 gesteuert. Dazu wird beispielsweise im Teillastbereich der Drehzahlsollwert des Blattwinkelreglers 32 etwas höher eingestellt als der optimale Drehzahlsollwert. Dies führt dazu, dass in der Regel nur der Drehmomentregler 33 aktiv ist, während der Blattwinkelregler,32 nur bei stärkeren Böen eingreift. Im Volllastbereich wird der Drehzahlsollwert 29 des Drehmomentreglers 33 unterhalb der optimalen Drehzahl eingestellt. Dadurch wird erreicht, dass im Volllastbereich im Wesentlichen der Blattwinkelregler 32 arbeitet, während der Drehmomentregler 33 nur bei stärkeren Negativböen aktiviert wird.

Der Drehzahlnachführer 25 bestimmt aus dem gemessenen Drehmoment 20 eine optimale Solldrehzahl. Diese ist maschinenspezifisch und abhängig von der Windgeschwindigkeit. Der Blattwinkelregler 32 vergleicht den ersten Drehzahlsollwert mit einem Drehzahlistwert und gibt den Blattwinkelsollwert als Stellgröße aus. Entsprechend vergleicht der Drehmomentregler 33 den zweiten Drehzahlsollwert 29 mit dem Drehzahlistwert und gibt den Drehmomentsollwert als Stellgröße aus. Alternativ zu der Ausführungsform gem. Fig. 2 kann die Blattwinkelabweichung 22 unabhängig von dem gemessenen Blattwinkel 38 gebildet sein. In diesem Fall fällt in Fig. 2 die Differenzvorrichtung 39 weg und die Blattwinkelstellgröße 34 wird direkt mit der Blattwinkelabweichung 22 verbunden bzw. entspricht dieser.

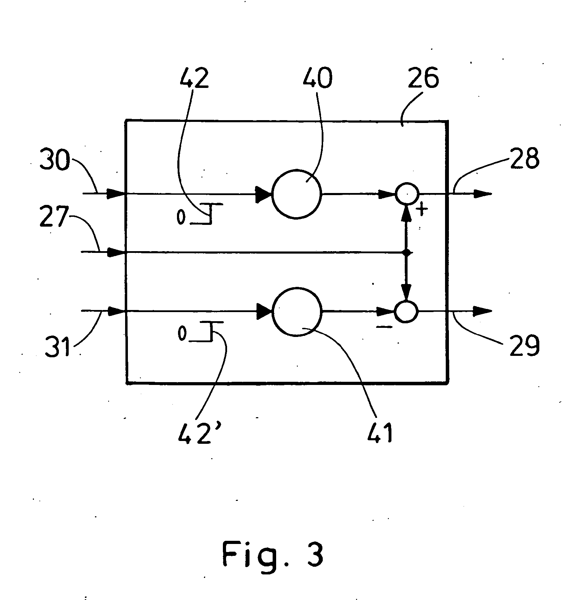

Fig. 3 zeigt einen Ausschnitt aus der Fig. 2, nämlich in schematischer Form die Berechnungseinheit 26. Es sind wieder die Eingänge Drehmomentdifferenz 30, dritter Drehzahlsollwert 27 und Blattwinkeldifferenz 31 dargestellt. Die Drehmomentregeldifferenz 30 wird mit $k_1$ 40 multipliziert und die Blattwinkeldifferenz 31 mit $k_2$ 41. Bei $k_1$ und $k_2$ kann es sich um Konstanten handeln. Diese können sich allerdings auch in Abhängigkeit von der oder den Eingangsgrößen, beispielsweise Drehmomentdifferenz, Blattwinkeldifferenz, dritter Drehzahlsollwert, Windgeschwindigkeit und/ oder Schnelllaufzahl verändern.

Das Ergebnis der Berechnung wird im oberen Glied zur Ermittlung des ersten Drehzahlsollwertes 28 zu dem dritten Drehzahlsollwert 27 addiert. In dem unteren Glied wird zur Ermittlung des zweiten Drehzahlsollwertes 29 das Ergebnis von dem dritten Drehzahlsollwert subtrahiert. Es findet auch noch eine Fallunterscheidung statt, bei der der dritte Drehzahlsollwert 27 ohne Veränderungen durchgeschliffen wird zum ersten Drehzahlsollwert 28 bzw. zum zweiten Drehzahlsollwert 29. Dieses geschieht, wenn die Drehmomentdifferenz ≤ 0 ist und auch wenn die Blattwinkeldifferenz ≤ 0 ist. Die sich ergebenden Formeln lauten wie folgt:

$$1.\ Drehzahlsollwert = \begin{cases} 3.\ Drehzahlsollwert + k_1\ x\ Drehmomentdifferenz, & falls\ Drehmomentdifferenz > 0 \\ 3.\ Drehzahlsollwert, & falls\ Drehmomentdifferenz \le 0 \end{cases}$$

$$2.\ Drehzahlsollwert = \begin{cases} 3.\ Drehzahlsollwert - k_2\ x\ Blattwinkeldifferenz, & falls\ Blattwinkeldifferenz > 0 \\ 3.\ Drehzahlsollwert, & falls\ Blattwinkeldifferenz \le 0 \end{cases}$$

Die Verstimmung der Drehzahlsollwerte 28 und 29 erfolgt also durch Addition oder Subtraktion der Differenzsignale des Drehmoments und des Blattwinkels. Für den Fall, dass die Drehmomentregeldifferenz > 0, ist liegt Teillastbereich vor und für den Fall, dass die Drehmomentdifferenz ≤ 0 ist, liegt Volllastbereich vor. Entsprechend liegt ein Volllastbereich vor, wenn die Blattwinkeldifferenz > 0 ist und Teillastbereich, wenn die Blattwinkeldifferenz ≤ 0 ist.

Als weitere Terme bei den angegebenen Formeln für den ersten und den zweiten Drehzahlsollwert können auch Polynome der Blattwinkeldifferenz bzw. der Drehmomentdifferenz, beispielsweise quadratische Terme, Verwendung finden. Die Heaviside-Funktion kann auch dergestalt verschoben sein, dass das Auswahlkriterium größer bzw. kleiner/gleich Null zu größer bzw. kleiner/gleich einer Konstanten $k_3$ verschoben ist.

Durch die Erfindung sind signifikante Mehrerträge bis zu einigen Prozent im Jahresmittel zu erwarten. Durch die beschriebene Nachführung der Sollwerte wird ein sanfter, lastarmer Übergang zwischen Drehmoment- und Blattwinkelregelung erreicht. Es sind auch geringere Betriebslasten trotz deutlich mehr Ertrag als mit den Regelungskonzepten gemäß dem Stand der Technik zu erzielen. Da der 1. Drehzahlsollwert 28 des Blattwinkelreglers 32 immer der optimalen Drehzahl nachgeführt wird, wird erreicht, dass der Blattwinkelregler 32 auch im Teillastbereich bei stärkerem Wind schnell eingreift. Dabei kann im Unterschied zum Stand der Technik auf einen differentiellen Anteil im Blattwinkelregler verzichtet werden, der zu einer Zunahme unproduktiver Blattwinkelverstellaktivitäten führen würde.

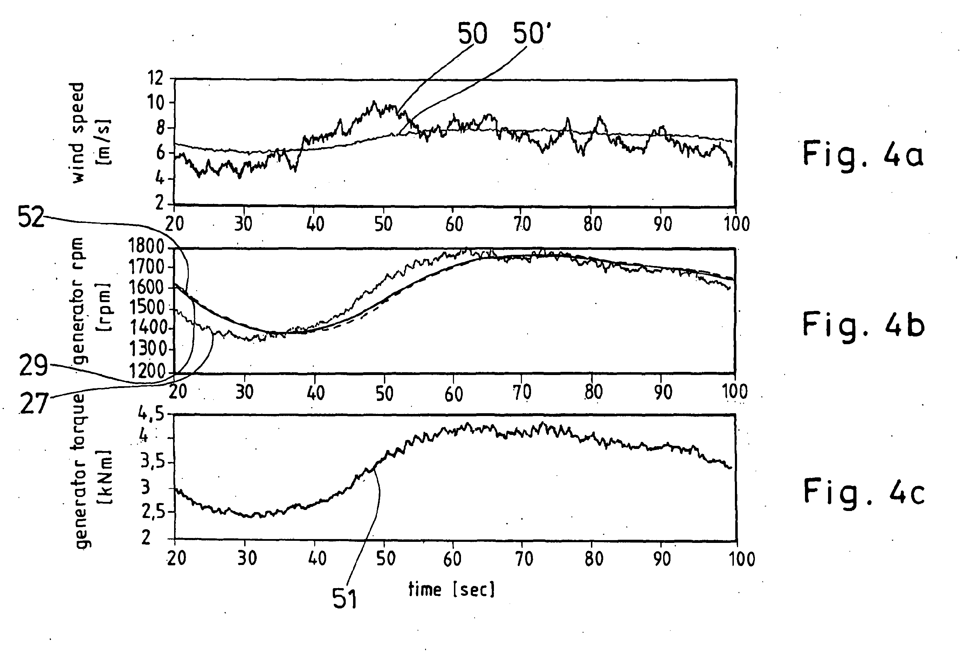

Die Diagramme in Fig. 4, nämlich 4a, 4b und 4c zeigen den Effekt der Erfindung im Teillastbereich.

Das erste Diagramm Fig. 4a zeigt die gemessene Windgeschwindigkeit 50 und die geschätzte Windgeschwindigkeit 50'. Die geschätzte Windgeschwindigkeit 50' wird in dem Drehzahlnachführer 25 berechnet. Aus der geschätzten Windgeschwindigkeit 50', die beispielsweise abhängig von dem Drehmoment, dem Leitungsbeiwert $c_P$ und/oder einem mechanischen Verlust sein kann, wird die optimale Drehzahl 27 bzw. der dritte Drehzahlsollwert 27 berechnet. Die optimale Drehzahl 27 kann beispielsweise mit der für die Windgeschwindigkeit optimalen Schnelllaufzahl berechnet werden.

Fig. 4b zeigt ein Diagramm der Drehzahl im Generator über der Zeit. Der zweite Drehzahlsollwert 29 ist durchgehend dargestellt. Es ist außerdem eine gemessene Generatordrehzahl 52 gestrichelt dargestellt und der dritte Drehzahlsollwert 27, der dem optimalen Drehzahlsollwert entspricht. Es ist zu erkennen, dass die gemessene Generatordrehzahl 52 dem optimalen Drehzahlsollwert 27 nachgeführt wird. Der zweite Drehzahlsollwert 29 entspricht fast der gemessenen Generatordrehzahl 52 und eilt diesem in diesem Beispiel ein wenig voraus. Es ist gut zu erkennen, dass die Generatordrehzahl sehr gut dem zweiten Drehzahlsollwert 29 folgt. Es ergibt sich allerdings auch eine gewisse Verzögerung zwischen dem optimalen Drehzahlsollwert 27 und dem zweiten Drehzahlsollwert 29.

Im Diagramm Fig. 4c ist das Generatordrehmoment 51 über der Zeit aufgetragen.

Ein wesentlicher Vorteil des neuen Regelverfahrens bzw. Regelsystems ist die bessere Ausnutzung des verfügbaren Generatordrehzahlbereichs, wodurch eine höhere aerodynamische Effizienz mit Geschwindigkeiten unterhalb des Volllastbereichs ermöglicht ist.

Sobald die Windgeschwindigkeit sich erhöht, wird es notwendig, das Drehmoment im Generator zu begrenzen und damit die elektrische Leistung. In diesem Fall wird das Generatordrehmoment im Wesentlichen konstant gehalten. Der Blattwinkelregler arbeitet nicht nur in Abhängigkeit der Generatordrehzahl sondern auch in Abhängigkeit des Generatordrehmoments. Der Effekt dieser drehmomentabhängigen Blattwinkelregelung ist derjenige, dass der Blattwinkelregler aktiv wird, wenn das Generatordrehmoment zum Volllastbetrieb steigt. Dieses wird durch die oben angegebene Formel erreicht, bei der der erste Drehzahlsollwert 28, der dem Blattwinkelregler 32 zugeführt wird, einen Term aufweist, der von dem Drehmoment abhängt. Ein wesentlicher Vorteil dieses Blattwinkelreglers bzw. dieser Blattwinkelregelung ist, dass diese bei niedrigen Windgeschwindigkeiten inaktiv ist, wodurch die Leistung der Windenergieanlage nicht beeinträchtigt wird, während diese bei höheren Windgeschwindigkeiten beginnt, so dass ein weicher Übergang von Teillastbetrieb zu Volllastbetrieb geschieht.

Es ist außerdem von Vorteil, dass der Blattwinkelregler eine sofortige Reaktion hervorruft, wenn das Generatordrehmoment nicht mit einem internen Drehmomentsollwert übereinstimmt. Sofern das Generatordrehmoment (insbesondere das gemessene) deutlich kleiner ist als der Sollwert, kann der Blattwinkel schnell vergrößert werden, um eine zu hohe Drehzahl des Rotors zu vermeiden.

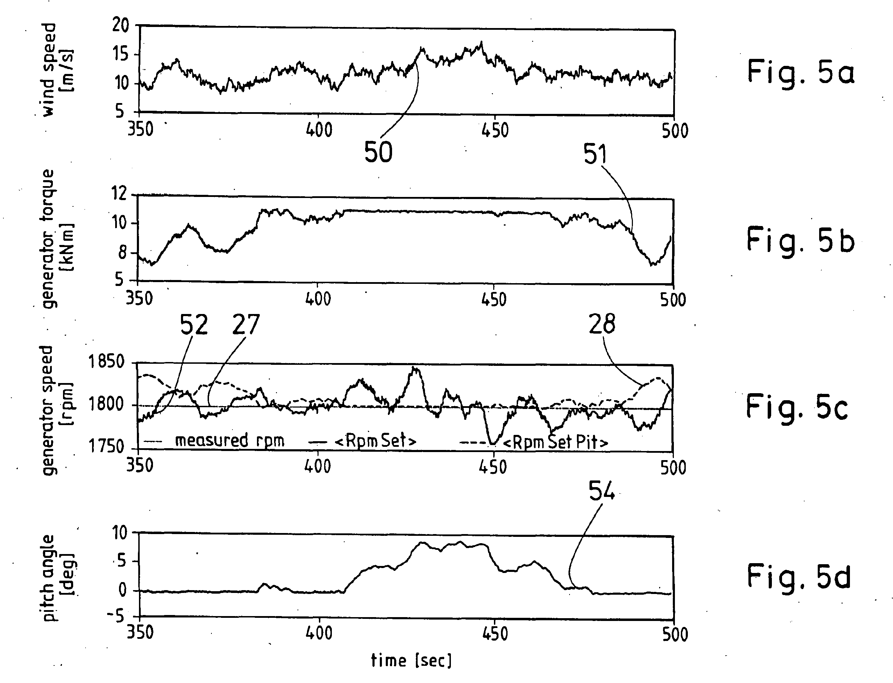

Der Effekt der drehmomentabhängigen Blattwinkelregelung kann in den schematischen Diagrammen der Fig. 5 beobachtet werden. Es wird angenommen, dass die Windgeschwindigkeit um die Windgeschwindigkeit für Volllastbetrieb liegt. Das erste Diagramm gemäß Fig. 5a zeigt die Windgeschwindigkeit über die Zeit. Das zweite Diagramm gemäß Fig. 5b zeigt das Diagramm des Generatordrehmoments über die Zeit. Hier ist gut zu erkennen, dass zeitweise Volllastbetrieb vorliegt. Dieses geschieht, wenn die Windgeschwindigkeit oberhalb von dem Nennwind liegt, also bei ungefähr bei 12 m/sec. In diesem Fall ist das Drehmoment auf das für die Windenergieanlage eingestellte Nenndrehmoment von 11 kNm gefahren.

Das dritte Diagramm, Fig. 5c, zeigt die Generatordrehzahl über die Zeit wobei drei verschiedene Funktionen dargestellt sind. Zum einen ist der Drehzahlsollwert dargestellt, der bei 1.800 Umdrehungen/min. (rpm) liegt. Die im Generator gemessene Drehzahl ist mit 52 bezeichnet. Der erste Drehzahlsollwert 28 ist gestrichelt dargestellt. In diesem Fall kann die optimale Leistung aus der Windenergieanlage gezogen werden, wenn der Rotor bei einer Geschwindigkeit von 1.800 Umdrehungen/Min. gehalten wird. Aus diesem Grund wird der (optimale) Sollwert auf diesem Wert gehalten. Der erste Drehzahlsollwert 28 ist in Abhängigkeit des gemessenen Generatordrehmomentes dergestalt, dass diese etwas oberhalb von dem dritten Drehzahlsollwert 27, also dem optimalen Drehzahlsollwert, liegt, und zwar solange das Drehmoment selbst unterhalb des maximalen Drehmoments liegt. Der Drehmomentregler 33 wird also dann aktiv, wenn das gemessene Drehmoment in der Nähe des Drehmomentsollwertes liegt.

Im vierten Diagramm (Fig. 5d) ist der Blattwinkel über die Zeit dargestellt. Für Werte größer Null ist der Blattwinkelregler aktiv.

Gemäß der Erfindung sind also die Pitch-Regelung abhängig von Drehmoment und die Drehmomentregelung abhängig vom Pitch- bzw. Blattwinkel. Der optimale Drehzahlsollwert 27 wird, insbesondere im Teillastbereich, nachgeführt und es existiert explizit vorzugsweise kein fester Nenndrehzahlsollwert für den Blattwinkelregler und auch nicht für den Drehmomentregler.

Wenn im Teillastbereich der optimale Drehzahlsollwert 27, insbesondere weit, oberhalb des Istwertes liegt, ist es vorzugsweise auch möglich, das Drehmoment des Generators kurzzeitig abzusenken, um den Rotor schneller auf seine Solldrehzahl zu beschleunigen.

Der 1., 2. und/oder 3. Drehzahlsollwert kann im Nennpunkt, also im Übergang von Teillast zu Volllast, gleich sein. Es kann also der 1. und der 2. Drehzahlsollwert, der 1. und der 3. Drehzahlsollwert und/oder der 2. und der 3. Drehzahlsollwert dort gleich sein.

Bezugszeichenliste

| 10 | Windenergieanlage |
| 11 | Rotor |
| 11' | Welle |
| 12 | Generator |
| 13 | Umrichter |
| 14 | Netz |
| 15, 15' | Rotorblatt |
| 16 | Getriebe |
| 17 | Rotationsbewegung |
| 18, 18' | Blattverstellbewegung ("pitchen") |
| 20 | gemessenes Drehmoment |
| 21 | Drehmomentsollwert |
| 22 | Blattwinkelabweichung |
| 24 | untere Grenze für Blattwinkelsollwert (fine pitch) |
| 25 | Drehzahmachführer |
| 26 | Berechnungseinheit |
| 27 | dritter Drehzahlsollwert |
| 28 | erster Drehzahlsollwert |
| 29 | zweiter Drehzahlsollwert |
| 30 | Drehmomentdifferenz |

| 31 | Blattwinkeldifferenz |
|---|---|
| 32 | Blattwinkelregler |
| 33 | Drehmomentregler |
| 34 | Blattwinkelstellgröße |
| 35 | Drehmomentstellgröße |
| 36 | Blattwinkelverstellvorrichtung |
| 37 | Drehmomenteinstellvorrichtung |
| 38 | gemessener Blattwinkel |
| 39 | Differenzvorrichtung |
| 40 | $k_1$ |
| 41 - | $k_2$ |
| 42 | Nullsetzelement |
| 50 | gemessene Windgeschwindigkeit |
| 50' | geschätzte Windgeschwindigkeit |
| 51 | Generatordrehmoment |
| 52 | gemessene Generatordrehzahl |
| 54 | Blattwinkel |
| 60 | Drehmomentdifferenzbestimmungsvorrichtung |
| 61 | Drehmomentbestimmungsvorrichtung |

**Patentansprüche**

1. Verfahren zur Regelung der Drehzahl (52) eines Rotors (11, 11') einer Windenergieanlage (10) mit einem Generator (12) und wenigstens einem Rotorblatt (15, 15'), wobei als erste Stellgröße ein Blattwinkel (54) des Rotorblatts (15, 15') vorgesehen ist und als zweite Stellgröße das Drehmoment (51) des Generators (12), mit den folgenden Verfahrensschritten:

   - Bereitstellen eines ersten Drehzahlsollwertes (28) als Eingangswert für eine Blattwinkelsteuer- oder -regelvorrichtung (32) und
   - Bereitstellen eines zweiten Drehzahlsollwertes (29) als Eingangswert für eine Drehmomentsteuer- oder -regelvorrichtung (33), wobei der erste und der zweite Drehzahlsollwert (28, 29) in einem Übergangsbereich von Teillast und Volllast der Windenergieanlage unterschiedlich zueinander sind.

2. Verfahren nach Anspruch 1, **dadurch gekennzeichnet, dass** ein dritter Drehzahlsollwert (27) vorgesehen ist, wobei der erste und der zweite Drehzahlsollwert (28, 29) sich aus dem dritten Drehzahlsollwert (27) bestimmen.

3. Verfahren nach Anspruch 2, **dadurch gekennzeichnet, dass** der dritte Drehzahlsollwert (27) aus einem Drehmomentistwert (20) bestimmt wird.

**4.** Verfahren nach einem der Ansprüche 1 bis 3, **dadurch gekennzeichnet, dass** der erste Drehzahlsollwert (28) sich aus einer Differenz (30) eines Drehmomentsollwertes (21) und eines Drehmomentistwertes (20) als Drehmomentdifferenz (30) bestimmt.

**5.** Verfahren nach Anspruch 4, **dadurch gekennzeichnet, dass** die Drehmomentdifferenz (30) beim Bestimmen des ersten Drehzahlsollwertes (28) als linearer Term beiträgt.

**6.** Verfahren nach einem oder mehreren der Ansprüche 1 bis 5, **dadurch gekennzeichnet, dass** der zweite Drehzahlsollwert (29) sich aus dem Blattwinkelsollwert (34) und/oder einer Differenz (31) eines Blattwinkelsollwertes (34) und eines Blattwinkelistwertes (38) als Blattwinkeldifferenz (31) bestimmt.

**7.** Verfahren nach Anspruch 6, **dadurch gekennzeichnet, dass** die Blattwinkeldifferenz (31) beim Bestimmen des zweiten Drehzahlsollwertes (29) als linearer Term beiträgt.

**8.** Verfahren nach einem oder mehreren der Ansprüche 3 bis 7, **dadurch gekennzeichnet, dass** der dritte Drehzahlsollwert (27), insbesondere mit einer, insbesondere vorgebbaren, Zeitverzögerung, dem Drehmoment-Istwert (20) nachgeführt wird.

**9.** Verfahren nach einem oder mehreren der Ansprüche 4 bis 8, **dadurch gekennzeichnet, dass** die Bestimmung des ersten Drehzahlsollwertes (28) eine Addition des dritten Drehzahlsollwertes (27) und der Funktion k1 x Dreh-momentdifferenz x $\theta$ (Drehmomentdifferenz) umfasst, wobei $\theta$ die Heaviside-Funktion ist.

**10.** Verfahren nach einem oder mehreren der Ansprüche 4 bis 9, **dadurch gekennzeichnet, dass** die Bestimmung des zweiten Drehzahlsollwertes (29) eine Subtraktion der Funktion k2 x Blattwinkeldifferenz x $\theta$ (Blattwinkeldifferenz) von dem dritten Drehzahlsollwert (27) umfasst, wobei $\theta$ die Heaviside-Funktion ist.

**11.** Verfahren nach einem oder mehreren der Ansprüche 1 bis 10, **dadurch gekennzeichnet, dass** bei Überschreitung einer, insbesondere vorgebbaren, Differenz eines Drehzahlistwertes von dem ersten, zweiten und/oder dritten Drehzahlsollwert und/oder bei Überschreiten eines, insbesondere vorgebbaren, Wertes der Drehmomentdifferenz die Drehzahl des Rotors schnell reduziert wird.

**12.** System zur Regelung der Drehzahl (52) eines Rotors (11, 11') einer Windenergieanlage (10) mit einem Generator (12) und einem Rotorblatt (15, 15') umfassend eine Blattwinkelsteuer- oder -regelvorrichtung (32) und eine Drehmomentsteuer- oder -regelvorrichtung (33), sowie eine erste Vorrichtung (26) zur Bestimmung eines ersten Drehzahlsollwertes (28) als erste Drehzahlsollwertbestimmungsvorrichtung (29) und eine zweite Vorrichtung (26) zur Bestimmung eines zweiten Drehzahlsollwertes (29) als zweite Drehzahlsollwertbestimmungsvorrichtung (26), wobei der erste Drehzahlsollwert (28) der Blattwinkelsteuer- oder -regelvorrichtung (32) zuführbar ist und der zweite Drehzahlsollwert (29) der Drehmomentsteuer- oder -regelvorrichtung (33) zuführbar ist, wobei der erste und der zweite Drehzahlsollwert (28, 29) in einem Übergangsbereich von Teillast und Volllast der Windenergieanlage unterschiedlich zueinander sind.

**13.** System nach Anspruch 12, **dadurch gekennzeichnet, dass** die erste Drehzahlsollwertbestimmungsvorrichtung (29) und die zweite Drehzahlsollwertbestimmungsvorrichtung (26) eine einzige Vorrichtung (26) ist.

**14.** System nach Anspruch 12 oder 13, **dadurch gekennzeichnet, dass** eine dritte Vorrichtung (25) zur Bestimmung eines dritten Drehzahlsollwertes (27) als dritte Drehzahlsollwertbestimmungsvorrichtung (25) vorgesehen ist, wobei ein Ausgang der dritten Drehzahlsollwertbestimmungsvorrichtung (25) mit einem Eingang der ersten und/oder zweiten Drehzahlsollwertbestimmungsvorrichtung (26) verbunden ist.

**15.** System nach einem der Ansprüche 12 bis 14, **dadurch gekennzeichnet, dass** eine Vorrichtung (60) zur Bestimmung der Differenz eines Drehmomentsollwertes (21) und eines Drehmomentistwertes (20) als Drehmomentdifferenzbestimmungsvorrichtung (60) vorgesehen ist, wobei der Ausgang der Drehmomentdifferenzbestimmungsvorrichtung (60) wenigstens mittelbar mit einem Eingang der ersten Drehzahlsollwertbestimmungsvorrichtung (26) verbunden ist.

**16.** System nach einem oder mehreren der Ansprüche 12 bis 15, **dadurch gekennzeichnet, dass** eine Vorrichtung (39) zur Bestimmung der Differenz eines Blattwinkelsollwertes (34) und eines Blattwinkelistwertes (38) als Blattwinkeldifferenzbestimmungsvorrichtung (39) vorgesehen ist, wobei der Ausgang der Blattwinkeldifferenzbestimmungsvorrichtung (39) wenigstens mittelbar mit einem Eingang der zweiten Drehzahlsollwertbestimmungsvorrichtung (26) verbunden ist.

17. System nach einem oder mehreren der Ansprüche 12 bis 16, **dadurch gekennzeichnet, dass** eine Drehmomentbestimmungsvorrichtung (61) vorgesehen ist, dessen Ausgang wenigstens mittelbar mit der dritten Drehzahlsollwertbestimmungsvorrichtung (25) verbunden ist.

18. Windenergieanlage mit einem System zur Regelung der Drehzahl eines Rotors nach einem oder mehreren der Ansprüche 12 bis 17.

**Claims**

1. A method of regulating the rotational speed (52) of a rotor (11, 11') of a wind turbine generator system (10) including a generator (12) and at least one rotor blade (15, 15'), wherein a blade angle (54) of the rotor blade (15, 15') is provided as a first control value and the torque (51) of the generator (12) as a second control value, including the following method steps:

   - providing a first desired value (28) of the rotational speed as an input value for a blade angle control or regulating device (32) and
   - providing a second desired value (29) of the rotational speed as an input value for a torque control or regulating device (33), wherein the first and second desired values (28, 29) of the rotational speed are different from one another in a transition region of partial load and full load of the wind turbine generator system.

2. A method as claimed in Claim 1, **characterised in that** a third desired value (27) of the rotational speed is provided, wherein the first and second desired values (28, 29) of the rotational speed are determined from the third desired value (27) of the rotational speed.

3. A method as claimed in Claim 2, **characterised in that** the third desired value (27) of the rotational speed is determined from an actual value (20) of the torque.

4. A method as claimed in one of Claims 1 to 3, **characterised in that** the first desired value (28) of the rotational speed is determined from a difference (30) of a desired value (21) of the torque and an actual value (20) of the torque constituting a torque difference (30).

5. A method as claimed in Claim 4, **characterised in that** the torque difference (30) contributes as a linear term in the determination of the first desired value (28) of the rotational speed.

6. A method as claimed in one or more of Claims 1 to 5, **characterised in that** the second desired value (29) of the rotational speed is determined from the desired value (34) of the blade angle and/or a difference (31) of a desired value (34) of the blade angle and an actual (38) of the blade angle constituting a blade angle difference (31).

7. A method as claimed in Claim 6, **characterised in that** the blade angle difference (31) contributes as a linear term to the determination of the second desired value (29) of the rotational speed.

8. A method as claimed in one or more of Claims 3 to 7, **characterised in that** the third desired value (27) of the rotational speed is revised in accordance with the actual value (20) of the torque, particularly with a, particularly predeterminable, time delay.

9. A method as claimed in one or more of Claims 4 to 8, **characterised in that** the determination of the first desired value (28) of the rotational speed includes an addition of the third desired value (27) of the rotational speed and the function k1 x torque difference x θ (torque difference), wherein θ is the Heaviside function.

10. A method as claimed in one or more of Claims 4 to 9, **characterised in that** the determination of the second desired value (29) of the rotational speed includes a subtraction of the function k2 x blade angle difference x θ (blade angle difference) from the third desired value (27) of the rotational speed, wherein θ is the Heaviside function.

11. A method as claimed in one or more of Claims 1 to 10, **characterised in that** when a, particularly predeterminable, difference of an actual value of the rotational speed from the first, second and/or third desired value of the rotational speed is exceeded and/or when a, particularly predeterminable, value of the torque difference is exceeded, the rotational speed of the rotor is rapidly reduced.

12. A system for regulating the rotational speed (52) of a rotor (11, 11') of a wind turbine generator system (10) including a generator (12) and a rotor blade (15, 15') including a blade angle control or regulating device (32) and a torque control or regulating device (33) and a first device (26) for determining a first desired value (28) of the rotational speed constituting a first rotational speed desired value determining device (29) and a second device (26) for determining a second desired value (29) of the rotational speed constituting a second rotational speed desired value determining device (26), wherein the first desired value (28) of the rotational speed may be fed to the blade angle control or regulating device (32) and the second desired value (29) of the rotational speed may be fed to the torque control or regulating device (33), wherein the first and the second desired values (28, 29) of the rotational speed are different to one another in a transition region of partial load and full load of the wind turbine generator system.

13. A system as claimed in Claim 12, **characterised in that** the first rotational speed desired value determining device (29) and the second rotational speed desired value determining device (26) is a single device.

14. A system as claimed in Claim 12 or 13, **characterised in that** a third device (25) for determining a third desired value (27) of the rotational speed constituting a third rotational speed desired value determining device (25) is provided, wherein an output of the third rotational speed desired value determining device (25) is connected to an input of the first and/or second rotational speed desired value determining device (26).

15. A system as claimed in one of Claims 12 to 14, **characterised in that** a device (60) for determining the difference of a desired value (21) of the torque and an actual value (20) of the torque constituting a torque difference determining device (60) is provided, wherein the output of the torque difference determining device (60) is connected at least indirectly to an input of the first rotational speed desired value determining device (26).

16. A system as claimed in one or more of Claims 1 to 15, **characterised in that** a device (39) for determining the difference of a desired value (34) of the blade angle and an actual value (38) of the blade angle constituting a blade angle difference determining device (39) is provided, wherein the output of the blade angle difference determining device (39) is connected at least indirectly to an input of the second rotational speed desired value determining device (26).

17. A system as claimed in one or more of Claims 12 to 16, **characterised in that** a torque determining device (61) is provided, whose output is connected at least indirectly to the third rotational speed desired value determining device (25).

18. A wind turbine generating system with a system for controlling the rotational speed of a rotor as claimed in one or more of Claims 12 to 17.


**Revendications**

1. Procédé pour régler le régime (52) d'un rotor (11, 11'), d'une installation éolienne (10) comprenant un générateur (12) et au moins une pale de rotor (15, 15"), un angle de calage de pale (54) de la pale de rotor (15, 15') étant prévu comme première grandeur de réglage et le couple (51) du générateur (12) comme seconde grandeur de réglage, présentant les étapes de procédé suivantes :

   - mise à disposition d'une première valeur de consigne (28) comme valeur d'entrée pour un dispositif de commande et de réglage d'angle de calage de pale (32) et
   - mise à disposition d'une seconde valeur de consigne de régime (29) comme valeur d'entrée pour un dispositif de commande et de réglage de couple (33), la première et la seconde valeurs de consigne (28, 29) étant différentes l'une par rapport à l'autre dans une plage de transition de charge partielle et de pleine charge de l'installation éolienne.

2. Procédé selon la revendication 1, **caractérisé en ce qu'**une troisième valeur de consigne de régime (27) est prévue, la première et la seconde valeur de consigne de régime (28, 29) se déterminant à partir de la troisième valeur de consigne de régime (27).

**3.** Procédé selon la revendication 2, **caractérisé en ce que** la troisième valeur de consigne de régime (27) est déterminée à partir d'une valeur réelle de couple (20).

**4.** Procédé selon l'une quelconque des revendications 1 à 3, **caractérisé en ce que** la première valeur de consigne de régime (28) est déterminée à partir d'une différence (30) entre une valeur de consigne de couple (21) et une valeur réelle de couple (20) comme différence de couple (30).

**5.** Procédé selon la revendication 4, **caractérisé en ce que** la différence de couple (30) contribue comme terme linéaire pour déterminer la première valeur de consigne de régime (28).

**6.** Procédé selon une ou plusieurs des revendications 1 à 5, **caractérisé en ce que** la seconde valeur de consigne de régime (29) est déterminée à partir de l'angle de calage de pale (34) et/ou une d'une différence (31) entre une valeur de consigne d'angle de calage de pale (34) et une valeur réelle d'angle de calage de rotor (38) comme différence d'angle de calage de rotor (31).

**7.** Procédé selon la revendication 6, **caractérisé en ce que** la différence d'angle de calage de rotor (31) contribue comme terme linéaire pour la détermination de la seconde valeur de consigne de régime (29).

**8.** Procédé selon une ou plusieurs des revendications 3 à 7, **caractérisé en ce que** la troisième valeur de consigne de régime (27) est asservie à la valeur réelle de couple (20), en particulier avec une temporisation, en particulier prédéfinissable.

**9.** Procédé selon une ou plusieurs des revendications 4 à 8, **caractérisé en ce que** la détermination de la première valeur de consigne de régime (28) comprend une addition de la troisième valeur de consigne de régime (27) et de la fonction k1 différence de couple x θ (différence de couple), θ étant la fonction de Heaviside.

**10.** Procédé selon une ou plusieurs des revendications 4 à 9, **caractérisé en ce que** la détermination de la seconde valeur de consigne de régime (29) comprend une soustraction de la fonction k2 x différence d'angle de calage de pale x θ (différence d'angle de calage de pale) et la troisième valeur de consigne de régime (27), θ étant la fonction de Heaviside.

**11.** Procédé selon une ou plusieurs des revendications 1 à 10, **caractérisé en ce que**, en cas de dépassement d'une différence, en particulier prédéfinissable, d'une valeur réelle de régime entre la première, la seconde et/ou la troisième valeur de consigne de régime et/ou en cas de dépassement d'une valeur, en particulier prédéfinissable, de la différence de couple, le régime du rotor est réduit rapidement.

**12.** Système pour le réglage du régime (52) d'un rotor (11, 11') d'une installation éolienne (10) doté d'un générateur (12) et d'une pale de rotor (15, 15') comprenant un dispositif de commande et de réglage d'angle de calage de rotor (32) et un dispositif de commande ou de réglage de couple (33), ainsi qu'un premier dispositif (26) pour déterminer une première valeur de consigne de régime (28) comme premier dispositif de détermination de valeur de consigne de régime (29) et un second dispositif (26) pour déterminer une seconde valeur de consigne de régime (29) comme second dispositif de détermination de valeur de consigne de régime(26), la première valeur de consigne de régime (28) pouvant être amenée au dispositif de commande et de réglage d'angle de calage de rotor (32) et la seconde valeur de consigne de régime (29) pouvant être amené au dispositif de commande ou de réglage de couple (33), la première et la seconde valeur de consigne de régime (28, 29) étant différentes l'une de l'autre dans une plage de transition de la charge partielle et de la charge pleine de l'installation éolienne.

**13.** Système selon la revendication 12, **caractérisé en ce que** le premier dispositif de détermination de valeur de consigne de régime (29) et le second dispositif de détermination de valeur de consigne de régime (26) sont un unique dispositif (26).

**14.** Système selon la revendication 12 ou 13, **caractérisé en ce qu'**un troisième dispositif (25) pour déterminer une troisième valeur de consigne de régime (27) est prévu comme troisième dispositif de détermination de valeur de consigne de régime (25), une sortie du troisième dispositif de détermination de valeur de consigne de régime (25) étant relié à une entrée du premier et/ou du second dispositif de détermination de valeur de consigne de régime (26).

**15.** Système selon l'une des revendications 12 à 14, **caractérisé en ce qu'**un dispositif (60) pour déterminer la différence entre une valeur de consigne de couple (21) et une valeur réelle de couple (20) est prévu comme dispositif de détermination de différence de couple (60), la sortie du dispositif de détermination de couple (60) étant relié au moins indirectement à une entrée du premier dispositif de détermination de valeur de consigne de régime (26).

16. Système selon l'une ou plusieurs des revendications 12 à 15, **caractérisé en ce qu'**un dispositif (39) pour déterminer la différence entre une valeur de consigne d'angle de calage de pale (34) et une valeur réelle d'angle de calage de rotor (38) est prévu comme dispositif de détermination d'angle de calage de rotor (39), la sortie du dispositif de détermination d'angle de calage de rotor (39) étant relié au moins indirectement à une entrée du second dispositif de détermination de valeur de consigne de régime (26).

17. Système selon une ou plusieurs des revendications 12 à 16, **caractérisé en ce qu'**un dispositif de détermination de couple (61) est prévu, dont la sortie est reliée au moins indirectement au troisième dispositif de détermination de valeur de consigne de régime (25).

18. Installation éolienne dotée d'un système pour régler le régime d'un rotor selon l'une ou plusieurs des revendications 12 à 17.

Fig. 1

Fig. 2

Fig. 3

Fig. 4a

Fig. 4b

Fig. 4c

Fig. 5a

Fig. 5b

Fig. 5c

— measured rpm   — <Rpm Set>   ---- <Rpm Set Pit>

Fig. 5d

time [sec]

EP 1 893 870 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4695736 A
- US 5155375 A
- US 6137187 A
- EP 1007844 B1
- WO 9907996 A